# EUROPEAN PATENT APPLICATION

(11) **EP 1 244 265 A2**
(43) Date of publication of application: **25.09.2002**
(21) Application number: 01125446.3
(22) Date of filing: 05.11.2001
(51) Int. Cl.: H04L 29/06

(54) **Integrated policy implementation service for communication network**

(30) Priority: 17.11.2000 US 715281
(71) Applicant: Alcatel Internetworking, Inc., Calabasas, CA 91301 (US)
(72) Inventor: Hayes, Jeff, Highland, Utah 84003 (US); Martin, Christopher, Apex, North Carolina 27502 (US)
(74) Representative: Dreiss, Fuhlendorf, Steimle & Becker

(57) **Abstract**

An integrated policy implementation service for a communication network where user authentication is integrated with QoS provisioning. The service includes an data communication switch connected to one or more policy servers. The switch transmits requests for user and device information to the end devices connected to the network. The devices respond by transmitting responses including the user and device information to the switch. The switch transmits the user and device information to the one or more policy servers for user authentication and QoS provisioning. The one or more policy servers respond by transmitting authentication information and QoS information to the switch. The switch uses the authentication information to determine whether to enable a network interface used by the user to communicate with the network. To the extent a determination is made to enable the network interface, the switch uses the received QoS information to establish a QoS on the switch. The QoS is then applied to the traffic received from the device used by the user to communicate with the network.

## Description

### FIELD OF THE INVENTION

The present invention relates generally to data communication networks, and more particularly, data communication networks integrating user authentication and quality of service provisioning into a single policy service.

### BACKGROUND OF THE INVENTION

Data communication networks are becoming more and more intelligent. One service increasing the intelligence of networks is user authentication. User authentication answers the question of whether a user may communicate in the network. Whereas legacy networks provided users unrestricted access the network, more recent vintage networks permit a user to communicate only after verifying the user's identity, and even then may allow the user to communicate only with a subset of network devices.

Another service raising the intelligence of networks is quality of service (QoS) provisioning. QoS provisioning addresses the question of how well a user may communicate in the network. Whereas legacy networks provided first-in-time delivery of packets, more recent vintage networks depart from first-in-time packet ordering and provide different QoS for different data flows.

QoS applies policy rules to the flows seen on the network. A policy rule generally includes a flow condition component and a QoS action component, and answers the question of what action should be applied to a flow meeting a particular condition. For example, a simple policy rule may take the form "treat traffic in group 2 at priority level 3," in which case the flow condition is "group 2" and the QoS action is "priority level 3."

While user authentication and QoS provisioning services have created more intelligent networks, they have not been tightly integrated. Typically, the QoS provisioning task has only been initiated after the user authentication task has been successfully completed. Duplication of effort and unnecessary delay have therefore resulted from such serialized policy provisioning.

### SUMMARY OF THE INVENTION

The present invention comprises an integrated policy implementation service for a communication network where user authentication is integrated with QoS provisioning.

In one aspect of the invention, a data communication switch supports the integrated policy implementation service via a single integrated policy server. The switch includes a first network interface that transmits to an end device a request for user and device information, and receives from the end device the requested user and device information. The user information may include a user identifier and password. The device information may include Layer 2 and/or Layer 3 information such as, for example, MAC addresses, Internet Protocol (IP) addresses, and virtual LAN (VLAN) identifiers.

The data communication switch includes a management interface that transmits the received user and device information to the policy server and receives user authentication and quality of service information in a single control flow between the management interface and the policy server. The authentication information may include ACK/NACK indicators and/or lists of authorized ports or devices. The QoS information may include priority and maximum bandwidth information.

The data communication switch also includes a first driver, such as, for example, a port driver, that transitions a network resource from an unauthenticated to an authenticated state in response to the user authentication information. In addition, a second driver, such as, for example, a QoS driver, implements a quality of service on the switch for data flows received from the data communication switch in response to the quality of service information.

In another aspect of the invention, the data communication switch supports the integrated policy implementation service via two independent policy servers. The switch includes a management interface that transmits the received user information to a first policy server in a first control flow and receives user authentication information from the first policy server in the first control flow. The management interface further transmits the received device information to a second policy server in a second control flow and receives quality of service information from the second policy server in the second control flow. The first and second control flows preferably occur in parallel. Such parallel execution of user authentication and QoS provisioning helps reduce the delays associated with serialized policy provisioning existing in the prior art.

### DESCRIPTION OF THE DRAWINGS

FIG. 1 is a schematic diagram of a communication network supporting an integrated policy implementation service;
FIG. 2 is a more detailed schematic diagram of a data communication switch supporting an integrated policy implementation service via two policy servers;
FIG. 3 is an exemplary schematic layout diagram of a user authentication table stored in one of the policy servers of FIG. 2;
FIG. 4 is an exemplary schematic layout diagram of a QoS table stored in the other policy server of FIG. 2;
FIG. 5 is an exemplary flow diagram of an integrated policy implementation service via the two policy servers of FIG. 2;
FIG. 6 is a more detailed schematic diagram of a data communication switch supporting an integrated policy implementation service via a single integrated policy server;
FIG. 7 is an exemplary schematic layout diagram of a user authentication table stored in the integrated policy server of FIG. 6;
FIG. 8 is an exemplary schematic layout diagram of a QoS table stored in the integrated policy server of FIG. 6; and
FIG. 9 is an exemplary flow diagram of an integrated policy implementation service via the integrated policy server of FIG. 6.

### DETAILED DESCRIPTION OF THE SPECIFIC EMBODIMENTS

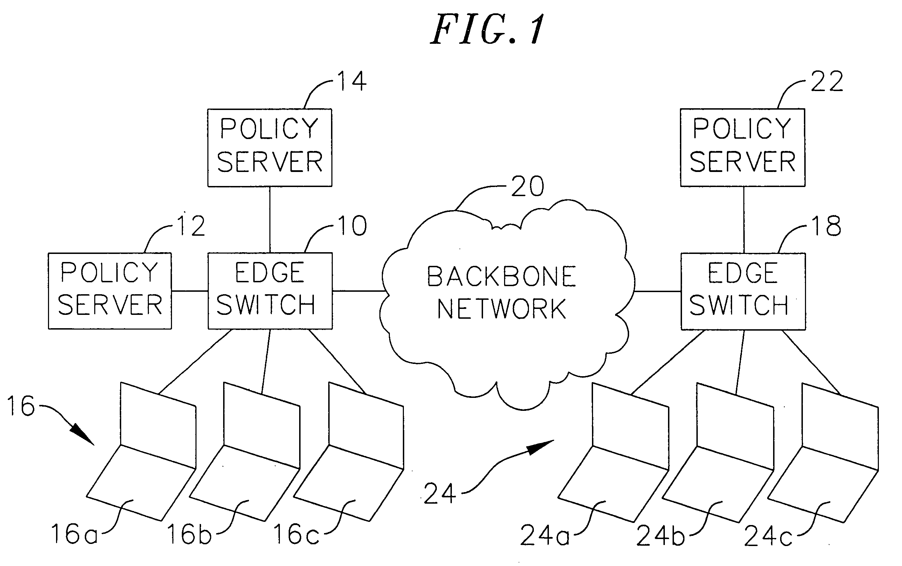

FIG. 1 is a schematic diagram of a communication network supporting an integrated policy implementation service. The network includes a data communication switch 10 coupled to policy servers 12, 14 and devices 16a, 16b, 16c. The data communication switch 10 is coupled to data communication switch 18 across a backbone network 20 via one or more core switches (not shown) operative in the backbone network. Data communication switch 18 is also coupled to a policy server 22 and devices 24a, 24b, 24c.

The devices 16, 24 are preferably network end-stations, such as, for example, personal computers, workstations, or servers, having respective network interfaces for packetized communication with other devices via the data communication switches 10, 18. The data communication switches 10, 18 are preferably gateway devices such as, for example, hubs, bridges, or routers, having a plurality of respective network interfaces for forwarding packetized communications originated by the devices 16, 24. The policy servers 12, 14, 22 preferably provide authentication and QoS provisioning services to the data communication switches 10, 18. The devices 16, 24, data communication switches 10, 18, and policy servers 12, 14, 22 may be interconnected via cables or other transmission media, and may support various data communication protocols, such as, for example, Ethernet, Internet Protocol, and Asynchronous Transfer Mode (ATM).

Integrated policy implementation service is discussed in general terms with respect to the data communication switch 10 and policy servers 12, 14. The data communication switch 10 preferably transmits requests for user and device information to the devices 16 connected to the network. The devices 16 preferably respond by transmitting responses including the user and device information to the switch 10. The switch 10 preferably transmits the received user and device information to the policy servers 12, 14 for user authentication and QoS provisioning. The policy servers 12, 14 preferably respond by transmitting authentication information and QoS information to the switch 10. The switch 10 preferably uses the authentication information to determine whether to enable a network interface used by the user to communicate with the network. To the extent a determination is made to enable the network interface, the switch preferably uses the received QoS information to establish a QoS on the switch. The QoS is then applied to the traffic received from the device used by the user to communicate with the network.

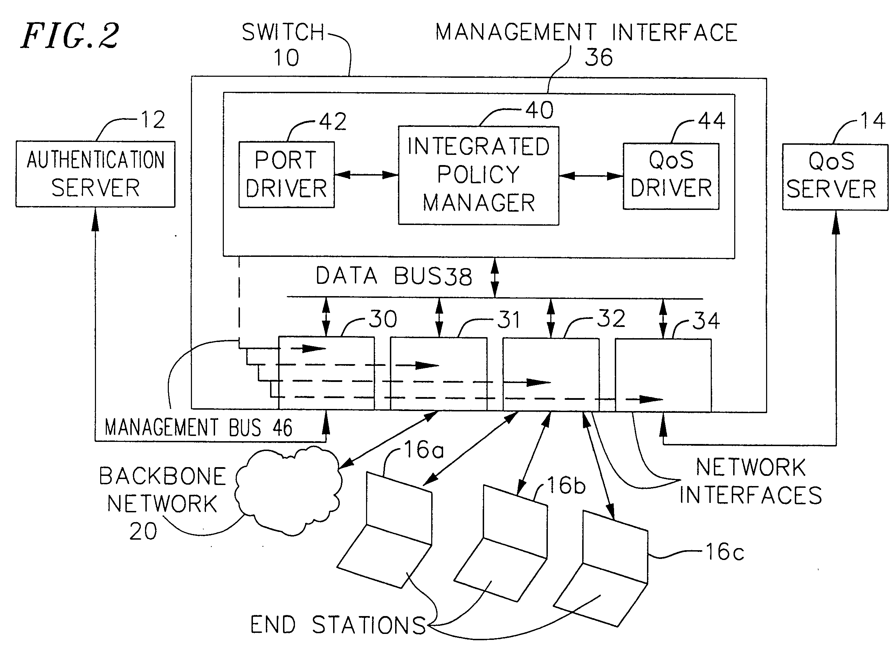

According to one embodiment of the invention, the integrated policy implementation service configuration preferably includes two independent policy servers as is illustrated by data communication switch 10 and policy servers 12, 14. FIG. 2 is a more detailed schematic diagram of the data communication switch 10 supporting an integrated policy implementation service via the two policy servers 12, 14 (also referred to as authentication and QoS servers). The data communication switch 10 includes network interfaces 30, 31, 32, 34 and a management interface 36 linked by a data bus 38. The network interfaces 30, 31, 32, 34 interconnect the devices 16, switches in the backbone network 20, and policy servers 12, 14 over different interfaces.

The management interface 36 and network interfaces 30, 31, 32, 34 are coupled to the data bus 38 for transmitting and receiving data traffic. The management interface 36 and network interfaces 30, 31, 32, 34 are also coupled to a management bus 46 for transmitting and receiving management information preferably including authentication and QoS information.

The management interface 36 supports various modules, including an integrated policy manager 40, port driver 42, and QoS driver 44. The integrated policy manager 40, port driver 42, and QoS driver 44 are preferably software modules. Alternatively, implementation of the system may be accomplished in a combination of hardware, firmware (e.g. application specific integrated circuits or other customized circuits), and/or software, or by any method known in the art.

According to one embodiment of the invention, the data communication switch 10 supports integrated policy implementation in the following manner. The integrated policy manager 40 transmits user and device information requests via the management bus 46 to the devices 16.

The devices 16 respond by transmitting the user and device information via the data bus 38. The user information preferably includes user identification information, such as, for example, a user ID, and user signature information, such as, for example, a password. The device information preferably includes Layer 2 and/or Layer 3 information, such as, for example, MAC addresses, IP addresses, VLAN identifiers, and the like. It should be understood, however, that one or more of such device information (e.g. the MAC address) may already be known to the data communication switch 10 via source learning. In this scenario, the known device address may not need to be expressly transmitted to the data communication switch.

The user and device information packets are captured off the data bus 38 by the management interface 36 and forwarded to the integrated policy manager 40. The integrated policy manager 40 proceeds to determine whether a particular user is authorized to communicate in the network and identify the QoS designed for the user device. In this regard, the integrated policy manager 40, in a first control flow, transmits the received user information to one of the policy servers, namely, the authentication server 12, and receives a corresponding authentication information from the authentication server. The authentication information preferably includes ACK/NACK indicators, list of authorized ports, and/or other authenticating information. Although FIG. 2 illustrates a single authentication server, a network operating in accordance with the present invention may include one or more authentication servers.

In a second control flow, the integrated policy manager 40 transmits the received device information to the second policy server, namely, the QoS server 14, and receives the QoS information for the device from the QoS server. The QoS information preferably includes priority levels, maximum bandwidth information, and the like.

The first and second control flows preferably occur in parallel. Such parallel execution of user authentication and QoS provisioning helps reduce the delays associated with serialized policy provisioning.

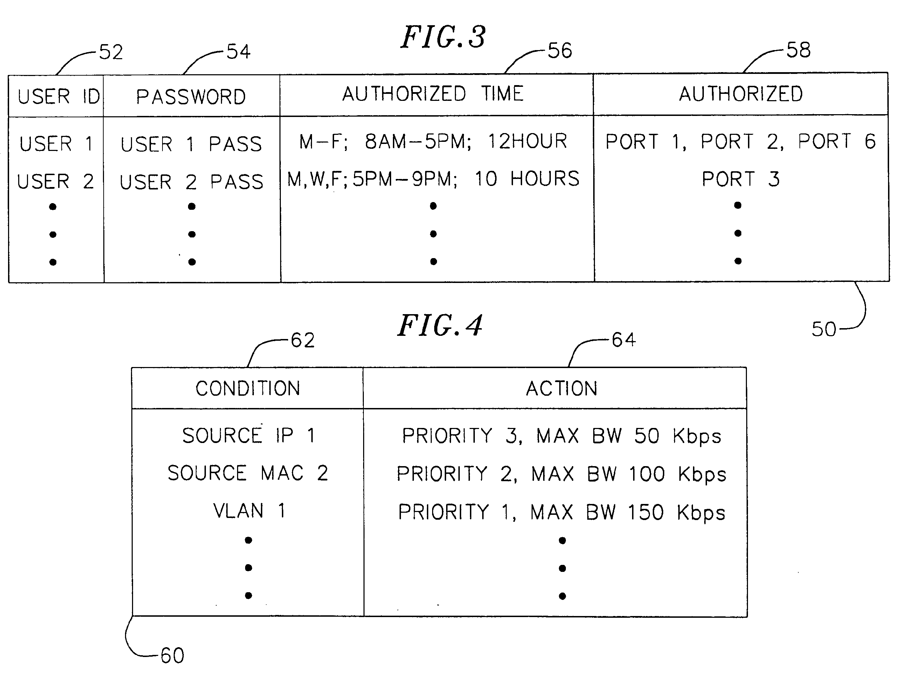

FIG. 3 is an exemplary schematic layout diagram of a user authentication table 50 stored in the authentication server 12. The authentication table 50 may be created and organized using tools such as, for example, NetWare®, which is commercially available from Novell, Inc. In one exemplary embodiment, the authentication table 50 suitably comprises a set of user authenticating information that may be arranged in a variety of ways, but is most advantageously configured as sequential entries, with each entry specific to a particular user to be authorized. A particular entry of the table 50 may include a unique user identifier 52, such as, for example, an identification number, character, or combination of numbers and characters. A particular entry may further include a user signature, such as, for example, a user password 54, for verifying the user seeking access to the network. In addition to the above, a particular entry may include time restriction information 56 as well as authorized resource information 58 for the particular user. The time restriction information preferably defines times during which the particular user is authorized to use the network resources, such as, for example, the day of the week, time of the day, and length of permitted access. The list of authorized network resources is preferably a list of authorized network interfaces and/or devices.

The authentication server 12 preferably utilizes the authentication table 50 to authorize a user in the manner described in U.S. Patent No. 6,070,243, the contents of which are hereby incorporated by reference. The protocol used for user authentication may include RADIUS, LDAP (Lightweight Directory Access Protocol), COPS (Common Open Policy Service), or any other authentication protocol known in the art, either alone or in combination.

In general terms, however, upon receipt of the user information from the data communication switch 10, the authentication server 12 preferably compares the received information with the user identification and signature information stored in the server 12. The authentication server 12 may further determine whether any time restrictions associated with the user identification information are applicable. If the authentication server 12 verifies that the user is an authorized user of the network resources, and that the user is authorized to use the network resources at the time of the log-in attempt, the server preferably transmits to the data communication switch 10 an ACK indicator and/or the list of network resources for which the user is authorized. The authentication server 12 may also transmit, along with the list of resources, any time restrictions applicable to the usage. The integrated policy manager 40 may then invoke the port driver 42 to establish network connectivity rules on the network interface 32 used by the user to communicate with the network. Specifically, the port driver preferably enables the authorized network resources by transitioning them from an unauthenticated state to an authenticated state. The integrated policy manager 40 may also perform time restriction processing based on the time restriction information 56.

FIG. 4 is an exemplary schematic layout diagram of a QoS table 60 stored in the QoS server 14. The QoS table 60 preferably comprises a set of flow conditions 62 and QoS actions 64 matching each of the flow conditions. The flow conditions 62 may include MAC addresses, IP addresses, VLAN identifiers, slot/port identifiers, IP protocols, interface types, and the like. The QoS actions 64 specify at least a priority level indicative of a priority given to traffic meeting the flow condition. The QoS actions 64 may further indicate a maximum bandwidth, minimum bandwidth, peak bandwidth, priority, latency, jitter, maximum queue depth, maximum queue buffers, and the like.

In identifying an applicable QoS for the traffic received from the device, the integrated policy manager 40 preferably uses LDAP or COPS to transmit a QoS request with the device information to the QoS server 14. Upon receipt of the device information, the QoS server 14 identifies a flow condition and returns the corresponding QoS action to the data communication switch 10. The QoS action packets are captured off the data bus 38 by the management interface 36 and forwarded to the integrated policy manager 40. The integrated policy manager 40 then notifies the QoS driver 44 to implement the QoS action on the switch. According to one embodiment of the invention, the data communication switch 10 may store the flow condition and the received QoS action in a cache for future use, as is disclosed in the application entitled "ON-SWITCH POLICY RULE CACHING FOR DATA COMMUNICATION SWITCH," filed on September 13, 2000, the contents of which are hereby incorporated by reference.

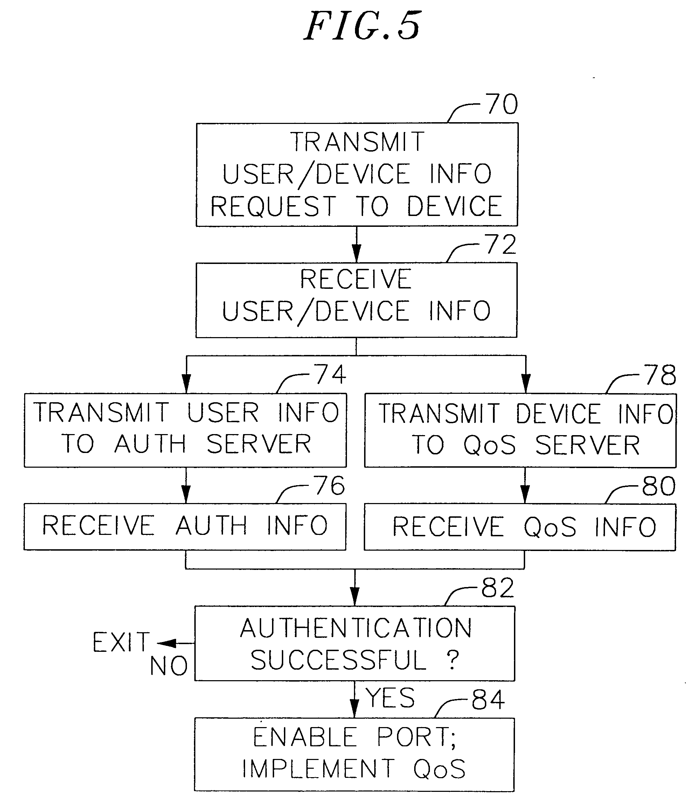

FIG. 5 is an exemplary flow diagram of an integrated policy implementation service supported by the switch 10 via the two policy servers 12, 14. In step 70, the management interface 36 preferably transmits a user and device information request to the devices 16. In step 72, the management interface 36 receives the requested user and device information from the devices 16. In a first control flow indicated by steps 74 and 76, the integrated policy manager 40 transmits a user authentication request with the user information to the authentication server 12 and receives back the user authentication information indicating whether the user has been authenticated.

In a second control flow indicated by steps 78 and 80, the integrated policy manager 40 transmits a QoS request with the device information to QoS server 14 and receives back the QoS information for the traffic originating from the device. The first and second control flows preferably over in parallel.

In step 82, an inquiry is made as to whether the user authentication was successful. If the authentication was successful, the integrated policy manager 40 preferably invokes the port driver 42 and the QoS driver 44 to enable the appropriate network interface and implement the identified QoS on the data communication switch 10.

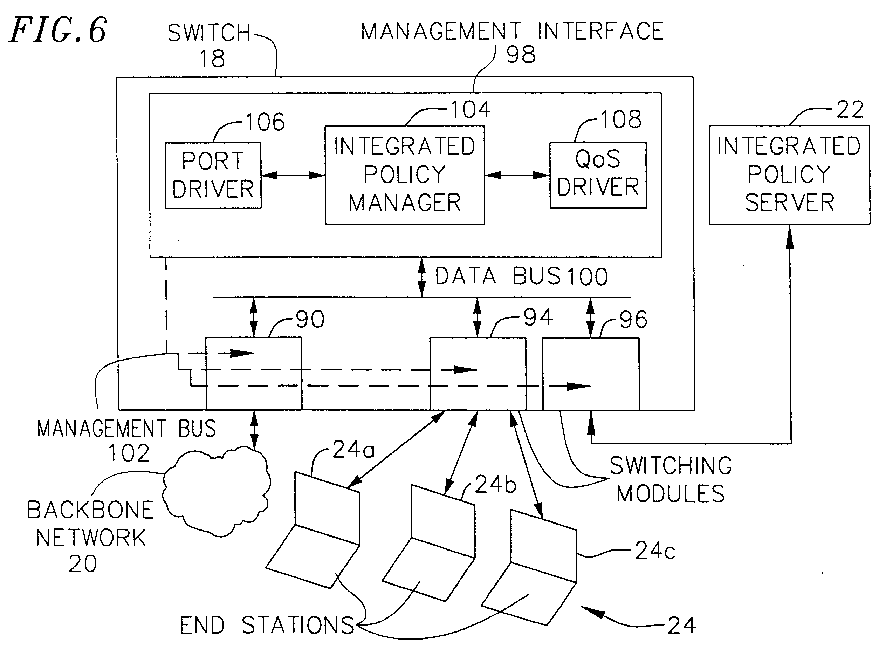

According to an alternative embodiment of the invention, the integrated policy implementation service configuration includes a single integrated policy server, as is illustrated by data communication switch 18 and policy server 22. FIG. 6 is a more detailed schematic diagram of the data communication switch 18 supporting an integrated policy implementation service via the single policy server 22 (also referred to as an integrated policy server). The data communication switch 18 includes network interfaces 90, 92, 94, 96 and management interface 98 linked by data bus 100. The network interfaces 90, 92, 94, 96 interconnect the devices 24, switches in the backbone network 20, and integrated policy server 22 over different interfaces.

The management interface 98 and network interfaces 90, 92, 94, 96 are coupled to the data bus 100 for transmitting and receiving data traffic. The management interface 98 and network interfaces 90, 92, 94, 96 are also coupled to a management bus 102 for transmitting and receiving management information including authentication and QoS information.

The management interface 98 supports various modules, including an integrated policy manager 104, port driver 106, and QoS driver 108. The policy manager 104, port driver 106, and QoS driver 108 are preferably software modules. Alternatively, implementation of the system may be accomplished in a combination of hardware, firmware (e.g. application specific integrated circuits or other customized circuits), and/or software, or by any method known in the art.

According to one embodiment of the invention, the data communication switch 18 supports integrated policy implementation in the following manner. The integrated policy preferably manager 104 transmits user and device information requests via the management bus 102 to the devices 24.

The devices 24 respond by transmitting the user and device information via the data bus 100. The user information preferably includes user identification information, such as, for example, a user ID, and user signature information, such as,. for example, a password. The device information preferably includes Layer 2 and/or Layer 3 information, such as, for example, MAC addresses, IP addresses, virtual LAN identifiers, and the like. It should be understood, however, that one or more of such device information (e.g. the MAC address) may already be known to the data communication switch 18 via source learning. In this scenario, the known device address may not need to be expressly transmitted to the data communication switch.

The user and device information packets are captured off the data bus 100 by the management interface 98 and forwarded to the integrated policy manager 104. The integrated policy manager 104 proceeds to determine whether a particular user is authorized to communicate in the network and identify the QoS designed for the user device. In this regard, the integrated policy manager 104, preferably in a single control flow, transmits to the integrated policy server 22 the received user and device information, and receives from the integrated policy server 22 a corresponding authentication and QoS information. The authentication information preferably includes ACK/NACK indicators, list of authorized parts, and/or other authenticating information. The QoS information preferably includes priority levels, maximum bandwidth information, and the like.

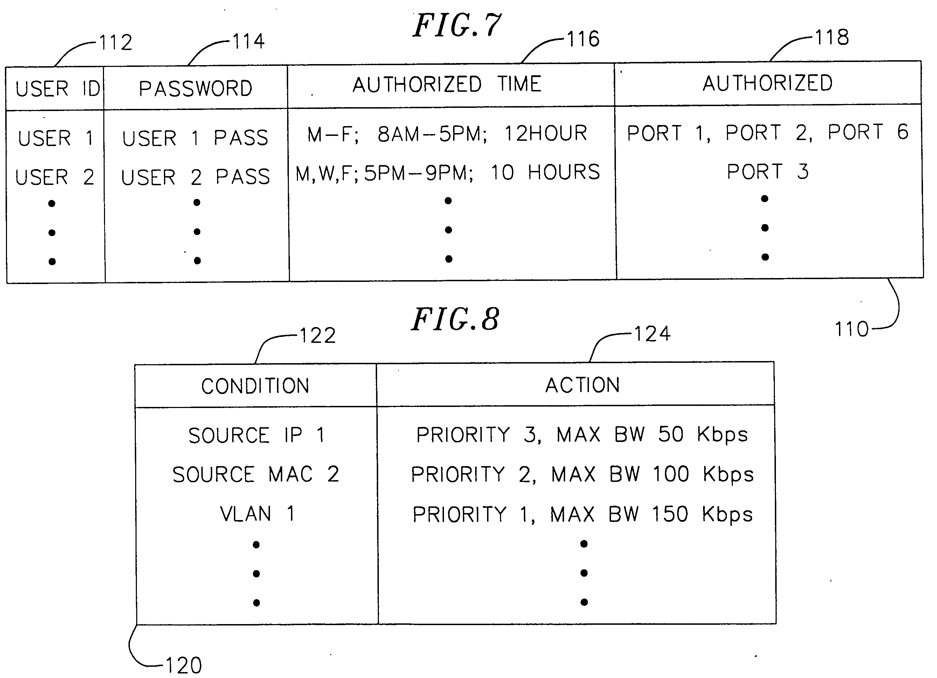

FIG. 7 is an exemplary schematic layout diagram of a user authentication table 110 stored in the integrated policy server 22. The authentication table 50 may be created and organized using tools such as, for example, NetWare®, which is commercially available from Novell, Inc. In one exemplary embodiment, the authentication table 110 suitably comprises a set of user authenticating information that may be arranged in a variety of ways, but is most advantageously configured as sequential entries, with each entry specific to a particular user to be authorized. A particular entry of the table 110 includes a unique user identifier 112, such as, for example, an identification number, character, or combination of numbers and characters. A particular entry further includes a. user signature, such as, for example, a user password 114, for verifying the user seeking access to the network. In addition to the above, a particular entry includes time restriction information 116 as well as authorized resource information 118 for the particular user. The time restriction information preferably defines times during which the particular user is authorized to use the network resources, such as, for example, the day of the week, time of the day, and length of permitted access. The list of authorized network resources is preferably a list of authorized network interfaces and/or devices.

FIG. 8 is an exemplary schematic layout diagram of a QoS table 120 also stored in the integrated policy server 22. The QoS table 120 preferably comprises a set of flow conditions 122 and QoS actions 124 matching each of the flow conditions. The flow conditions 122 preferably include MAC addresses, IP addresses, VLAN identifiers, slot/port identifiers, IP protocols, interface types, and the like. The QoS actions 124 specify at least a priority level indicative of a priority given to traffic meeting the flow condition. The QoS actions 124 may further indicate a maximum bandwidth, minimum bandwidth, peak bandwidth, priority, latency, jitter, maximum queue depth, maximum queue buffers, and the like.

According to one embodiment of the invention, the authentication and QoS tables 110, 120 are stored in one or more databases hosted by the integrated policy server 22. The database(s) preferably reside in one or more mass storage devices, such as, for example, hard disk drives, or drive arrays.

The integrated policy server 22 preferably utilizes the authentication table 110 to authorize a user in the manner described in U.S. Patent No. 6,070,243, the contents of which are hereby incorporated by reference. The protocol used for user authentication may include RADIUS, LDAP (Lightweight Directory Access Protocol), COPS, or any other authentication protocol known in the art, either alone or in combination. The integrated policy server 22 further uses the QoS table 120 to identify the appropriate QoS based on the device information. The protocol used to transmit a QoS request is preferably LDAP or COPS.

In general terms, upon receipt of the user and device information from the data communication switch 18, the integrated policy manager 104 proceeds to obtain the authentication and QoS information preferably in a single control flow between the data communication switch and the integrated policy server 22. In this regard, the integrated policy server preferably compares the received user identification and signature information with the information stored in the authentication table 110. If the user is verified, the integrated policy server 22 also determines whether any time restrictions associated with the user identification information are applicable.

The integrated policy server 22 further proceeds to identify an applicable QoS based on the received device information. In this regard, the integrated policy server 22 interrogates the QoS table 120 to identify a flow condition and returns the corresponding QoS action.

The integrated policy server 22 then transmits the user authentication and QoS information to the data communication switch 18. If the integrated policy server 22 verifies that the user is an authorized user of the network resources, and that the user is authorized to use the network resources at the time of the log-in attempt, the server transmits to the data communication switch 22 an ACK indicator and/or the list of network resources for which the user is authorized. The integrated policy server 22 may also transmit, along with the list of resources, any time restrictions applicable to the usage. The integrated policy server 22 also transmits to the data communication switch 18 the identified QoS action including priority level, maximum bandwidth, and the like.

The authentication and QoS action packets are captured off the data bus 100 by the management interface 98 and forwarded to the integrated policy manager 104. The integrated policy manager 104 then invokes the port driver 106 to establish network connectivity rules on the network interface 94 used by the user to communicate with the network. Specifically, the port driver enables the authorized network resources by transitioning them from an unauthenticated state to an authenticated state.

The integrated policy manager also invokes the QoS driver 108 to implement the QoS action on the switch. According to one embodiment of the invention, the data communication switch 18 may store the flow condition and the received QoS action, in the cache for future use, as is disclosed in the application entitled "ON-SWITCH POLICY RULE CACHING FOR DATA COMMUNICATION SWITCH," filed on September 13, 2000, the contents of which are hereby incorporated by reference.

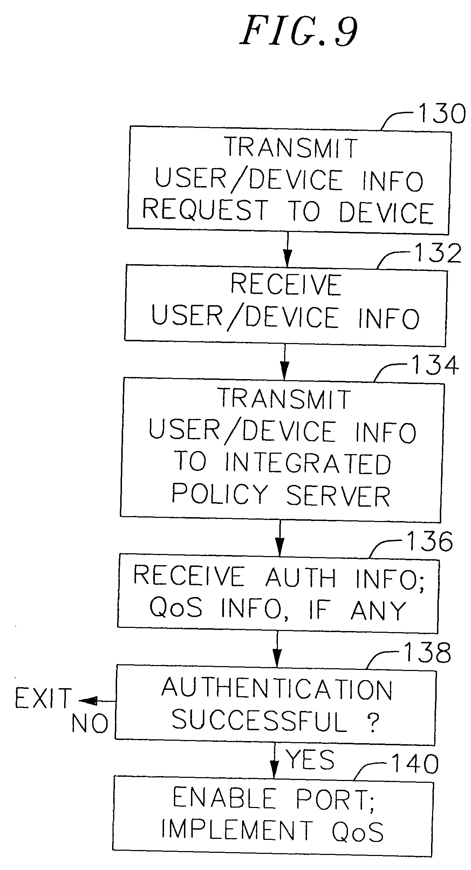

FIG. 9 is an exemplary flow diagram of an integrated policy implementation service supported by the switch 18 via the single integrated policy server 22. In step 130, the management interface 98 transmits a user and device information request to the devices 24. In step 132, the management interface 98 receives the requested user and device information from the devices 24. In step 134, the integrated policy manager 104 transmits the user and device information to the integrated policy server 22 in a request for user authentication and QoS provisioning. In step 136, the integrated policy manager 104 receives the user authentication information and QoS information if the user has been authenticated. In step 138, an inquiry is made as to whether the user authentication was successful. If the authentication was successful, the integrated policy manager 104 invokes the port driver 106 and QoS driver 108 to enable the appropriate network interface and implement the identified QoS on the data communication switch 18.

According to one embodiment of the invention, the switches 10, 18 may be arranged to be operative in independent (two policy servers) and integrated (one policy server) modes. The type of mode selected is preferably automatically determined based on the current service configuration.

Although this invention has been described in certain specific embodiments, those skilled in the art will have no difficulty devising variations which in no way depart from the scope and spirit of the present invention. It is therefore to be understood that this invention may be practiced otherwise than is specifically described. Thus, the present embodiments of the invention should be considered in all respects as illustrative and not restrictive, the scope of the invention to be indicated by the appended claims and their equivalents rather than the foregoing description.

## Claims

1. A data communication switch in a communication network including an end device and one or more policy servers, the data communication switch for use in an integrated policy implementation service for the network, the data communication switch comprising:
means for transmitting to the end device a request for a plurality of information;
means for receiving from the end device the requested plurality of information;
means for concurrently transmitting to the one or more policy servers the received plurality of information; and
means for concurrently receiving from the one or more policy servers user authentication and quality of service information, the user authentication and quality of service information being based on the transmitted plurality of information.

2. The data communication switch of claim 1, wherein the plurality of information includes user and device information.

3. The data communication switch of claim 1, wherein the switch is in communication with one policy server, the one policy server including:
means for retrieving the user authentication information; and
means for retrieving the quality of service information.

4. The data communication switch of claim 1, wherein the switch is in communication with two policy servers, the first policy server including means for retrieving the user authentication information and the second policy server including means for retrieving the quality of service information.

5. The data communication switch of claim 1 further comprising means for transitioning a network resource from an unauthenticated to an authenticated state in response to the user authentication information.

6. The data communication switch of claim 1 further comprising means for implementing a quality of service on the switch in response to the quality of service information for data flows received from the end device.

7. The data communication switch of claim 1, wherein the user authentication information includes a list of authorized network resources.

8. The data communication switch of claim 1, wherein the quality of service information includes a quality of service action to be applied to data flows received from the end device.

9. The data communication switch of claim 1 further comprising:
a first mode for supporting a single policy server;
a second mode for supporting two policy servers; and
means for selecting between the first mode and the second mode.

10. A data communication switch in a communication network including an end device and a policy server, the data communication switch for use in an integrated policy implementation service for the network, the data communication switch comprising:
a first network interface transmitting to the end device a request for a plurality of information and receiving from the end device the requested plurality of information;
a management interface coupled to the first network interface, the management interface transmitting the received plurality of information to the policy server and the policy server retrieving user authentication and quality of service information in response to the plurality of information and concurrently communicating the retrieved user authentication and quality of service information to the management interface;
a first driver coupled to the management interface, the first driver transitioning a network resource from an unauthenticated to an authenticated state in response to the user authentication information; and
a second driver coupled to the management interface, the second driver implementing a quality of service on the switch for data flows received from the end device in response to the quality of service information.

11. The data communication switch of claim 10, wherein the plurality of information includes user and device information.

12. The data communication switch of claim 10, wherein the user authentication information includes a list of authorized network resources.

13. The data communication switch of claim 10, wherein the quality of service information includes a quality of service action to be applied to data flows received from end device.

14. A data communication switch in a communication network including an end device and a policy server, the data communication switch for use in an integrated policy implementation service for the network, the data communication switch comprising:
a first network interface transmitting to the end device a request for a plurality of information and receiving from the end device the requested plurality of information;
a management interface coupled to the first network interface, the management interface transmitting the received plurality of information to the policy server in a single control flow and receiving user authentication and quality of service information from the policy server in the control flow;
a first driver coupled to the management interface, the first driver transitioning a network resource from an unauthenticated to an authenticated state in response to the user authentication information; and
a second driver coupled to the management interface, the second driver implementing a quality of service on the switch for data flows received from the end device in response to the quality of service information.

15. The data communication switch of claim 14, wherein the plurality of information includes user and device information.

16. The data communication switch of claim 14, wherein the user authentication information includes a list of authorized network resources.

17. The data communication switch of claim 14, wherein the quality of service information includes a quality of service action to be applied to data flows received from the end device.

18. A data communication switch in a communication network including an end device, a first policy server, and a second policy server, the data communication switch for use in an integrated policy implementation service for the network, the data communication switch comprising:
a first network interface transmitting to the end device a request for a plurality of information and receiving from the end device the requested plurality of information;
a management interface coupled to the first network interface transmitting to the first policy server in a first control flow a first portion of the plurality of the information and receiving from the first policy server in the first control flow user authentication information, the management interface further transmitting to the second policy server in a second control flow a second portion of the plurality of the information and receiving from the second policy server in the second control flow a quality of service information, wherein the first control flow occurs concurrently with the second control flow;
a first driver coupled to the management interface, the first driver transitioning a network resource from an unauthenticated to an authenticated state in response to the user authentication information; and
a second driver coupled to the management interface, the second driver implementing a quality of service on the switch for data flows received from the end device in response to the quality of service information.

19. The data communication switch of claim 18, wherein the plurality of information includes user and device information.

20. The data communication switch of claim 18, wherein the user authentication information includes a list of authorized network resources.

21. The data communication switch of claim 18, wherein the quality of service information includes a quality of service action to be applied to data flows received on the switch.

22. A data communication switch in a communication network including an end device and one or more policy servers, a method for integrated policy implementation service for the network comprising:
transmitting to the end device a request for a plurality of information;
receiving from the end device the requested plurality of information;
transmitting to the one or more policy servers the received plurality of information; and
receiving from the one or more policy servers user authentication information concurrently with quality of service information, the user authentication and quality of service information being based on the transmitted plurality of information.

23. The method of claim 22, wherein the plurality of information includes user and device information.

24. The method of claim 22 further comprising:
retrieving the user authentication information; and
retrieving the quality of service information.

25. The method of claim 22 further comprising transitioning a network resource from an unauthenticated to an authenticated state in response to the user authentication information.

26. The method of claim 22 further comprising implementing a quality of service on the switch for data flows received from the end device in response to the quality of service information.

27. The method of claim 22, wherein the user authentication information includes a list of authorized network resources.

28. The method of claim 22, wherein the quality of service information includes a quality of service action to be applied to data flows received on the switch.

29. The method of claim 22 further comprising selecting between a first mode supporting a single policy server and a second mode supporting two policy servers.

30. In a communication network including a switch communicating with an end device, a first policy server, and a second policy server, a method for integrated policy implementation service for the network comprising:
transmitting to the end device a request for a plurality of information;
receiving from the end device the requested plurality of information;
transmitting to the first policy server in a first control flow a first portion of the plurality of the information and receiving from the first policy server in the first control flow user authentication information; and
transmitting to the second policy server in a second control flow a second portion of the plurality of the information and receiving from the second policy server in the second control flow a quality of service information;
wherein the first control flow occurs concurrently with the second control flow.

31. The method of claim 30, wherein the plurality of information includes user and device information.

32. The method of claim 30 further comprising transitioning a network resource from an unauthenticated to an authenticated state in response to the user authentication information.

33. The method of claim 30 further comprising implementing a quality of service on the switch for data flows received from the end device in response to the quality of service information.

34. The method of claim 30, wherein the user authentication information includes a list of authorized network resources.

35. The method of claim 30, wherein the quality of service information includes a quality of service action to be applied to data flows received on the switch.
